# EUROPÄISCHE PATENTSCHRIFT

(11) **EP 3 101 041 B1**
(45) Veröffentlichungstag und Bekanntmachung des Hinweises auf die Patenterteilung: **04.09.2019**
(21) Anmeldenummer: 15170660.3
(22) Anmeldetag: 04.06.2015
(51) Int. Cl.: C08F 212/36, B60C 1/00, C08F 216/12, C08F 218/18, C08F 236/06, C09J 4/00, C08F 222/10, C04B 41/48, C08F 220/18, E21D 9/00, E21D 11/00

(54) **ACRYLATZUSAMMENSETZUNG ZUM ABDICHTEN VON TUNNELBAUWERKEN**
ACRYLATE COMPOSITION FOR SEALING TUNNEL STRUCTURES
COMPOSITION D'ACRYLATE DESTINÉE À L'ÉTANCHÉITÉ DE TUNNELS SOUTERRAINS

(43) Veröffentlichungstag der Anmeldung: 07.12.2016
(73) Patentinhaber: Sika Technology AG, 6340 Baar (CH)
(72) Erfinder: Haufe, Markus, 8048 Zürich (CH); Schmiedle, Daniela, 88453 Erolzheim (DE); Kühner, Stefan, 70439 Stuttgart (DE); Hoppenkamps, Ulrich, 41366 Schwalmtal (DE)
(74) Vertreter: Sika Patent Attorneys

(56) Entgegenhaltungen:
- EP-A1- 1 726 432
- EP-A1- 2 706 146
- US-A- 5 725 906
- US-A1- 2014 193 204

## Beschreibung

### Technisches Gebiet

Die vorliegende Erfindung betrifft das Gebiet der Acrylatzusammensetzungen geeignet zum Abdichten von Tunnelbauwerken gegen Feuchtigkeit.

### Stand der Technik

Obwohl auf beliebige Baubereiche im Tunnelbau anwendbar, werden die vorliegende Erfindung sowie die ihr zugrunde liegende Problematik nachfolgend mit Bezug auf einen Verkehrstunnel näher erläutert.

Im maschinellen Tunnelbau mit der Technik des Schildvortriebs kommen häufig stahlarmierte Betonfertigteile für die Innenschale vor. Diese im Fachjargon als Tübbing bezeichneten Betonfertigteile werden in Fertigteilbetonwerken vorfabriziert, bis zur Erreichung der benötigten Betonfestigkeit zwischengelagert und dann je nach Bedarf in die Tunnelröhre zum Einbau verbracht. Dort werden sie im Schutz des Schildes der Tunnelbohrmaschine von einer Tübbingversetzeinrichtung, dem sogenannten "Erektor" aufgegriffen und zu einem Tübbingring zusammengebaut. Nachdem die Tunnelbohrmaschine unter Abstützung gegen die zuletzt eingebauten Tübbings durch hydraulische Pressen vorgetrieben wurde, wird im Schutz des Schildes ein neuer Tübbingring eingebaut. Auf diese Weise arbeitet sich die Maschine "Tübbingring um Tübbingring" durch den Untergrund.

Nicht nur klassische Verkehrstunnel, sondern bei Vorliegen besonderer geologischer Verhältnisse auch sogenannte Ver- bzw. Entsorgungstunnel für Haushalte, Gewerbe oder Industrie, die insbesondere in Form durchmessergroßer Sammelleitungen zum zentralen Transport von Abwasser oder Frischwasser oder als Kabeltunnel zur Aufnahme von Hochspannungsleitungen dienen, werden nach vorgeschilderter Segmentbauweise im Tübbingausbauverfahren hergestellt.

Solche Tunnelbauwerke müssen auch Gebiete durchqueren, in denen geologisch problematische Umgebungsverhältnisse herrschen, wie zum Beispiel Umgebungen mit wasserreaktivem Baugrund. Ein Beispiel für solche geologisch problematischen Umgebungsverhältnisse ist der Anhydrit im Raum Stuttgart in Deutschland. Bei Tunneln in Tübbingbauweise wird der Ringspalt zwischen der Hohlraumbohrung und den Tübbingbauteilen mit einer Mörtelsuspension verfüllt, um die Tübbingbauteile zu stabilisieren und in dem aufgelockerten Boden einzubetten. Das Einspritzen von Mörtelsuspensionen in den Ringspalt erfolgt unter Druck.

EP 2 706 906 offenbart ein Verfahren zum Bau eines Verkehrswegetunnels in Tübbingbauweise, bei dem Tübbingbauteile in einer maschinell erzeugten Hohlraumbohrung zusammengesetzt werden und der Zwischenraum zwischen der Innenwand der Hohlraumbohrung und den Außenwänden mit Perlkies aufgefüllt wird.

Beim Bau von Verkehrswegetunneln in Gebieten mit geologisch problematischen Umgebungsverhältnissen kommt es oft zu Schäden an den Tunneln, wenn zum Beispiel in Umgebungen mit wasserreaktiven Lockergesteinen oder Festgesteinen eine Verfüllung des Ringspalts mit Mörtelsuspensionen erfolgt, da es dort aufgrund des Wassergehaltes des Mörtels zu Reaktionen kommt, die zu schädigenden Rückwirkungen auf die Tunnelwand führen. Aus diesem Grund ist der Einsatz von Mörtelsuspensionen beim Tunnelbau in einigen Gebieten problematisch.

### Darstellung der Erfindung

Aufgabe der vorliegenden Erfindung ist es daher, ein Verfahren zum Bau von Tunnelbauwerken in Tübbingbauweise anzugeben, mit der einschalige oder zweischalige Hohlraumbauwerke auch bei geologisch problematischen Umgebungsverhältnissen wie durch Wasser quellfähigen Baugründen mit Ringspaltverfüllung verfüllt, gebettet und gedichtet werden können. Weiterhin sollen die Klüftigkeit und etwaige Hohlräume oder Poren des umgebenden Gesteins zementfrei verfüllt und gedichtet werden können.

Zur Lösung dieser Aufgabe dient das Verfahren mit den Merkmalen des Patentanspruchs 1.

Es hat sich gezeigt, dass ein Verfahren gemäss Anspruch 1 in der Lage ist, diese Aufgabe zu lösen. Vorteilhafte Ausführungsformen der Erfindung sind in den Unteransprüchen aufgeführt.

### Wege zur Ausführung der Erfindung

Die vorliegende Erfindung betrifft ein Verfahren zum Erstellen eines Tunnelbauwerks, insbesondere eines Verkehrswegetunnels, in Tübbingbauweise, bei dem Tübbingbauteile in einer maschinell erzeugten Hohlraumbohrung durch einen Untergrund zusammengesetzt werden, um eine geschlossene Auskleidung zu bilden, und Schüttgut in den Zwischenraum zwischen der Innenwand des Hohlraums und den Aussenwänden der Tübbingbauteile eingebracht wird, insbesondere der Zwischenraum mit Schüttgut aufgefüllt wird,
dadurch gekennzeichnet, dass zusätzlich zum Einbringen von Schüttgut in den Zwischenraum eine Acrylatzusammensetzung, insbesondere unter Druck, eingebracht, insbesondere eingespritzt, wird, um den Zwischenraum zu verfüllen, wobei die Acrylatzusammensetzung weniger als 10 Gewichts-% Wasser, bezogen auf das Gesamtgewicht der Acrylatzusammensetzung, aufweist und es sich bei der Acrylatzusammensetzung um eine radikalisch aushärtbare Acrylatzusammensetzung handelt, welche mindestens ein (Meth)acrylatmonomer R aufweist.

Mit "Poly" beginnende Substanznamen wie beispielsweise Polyisocyanat, Polyurethan, Polyester oder Polyol bezeichnen im vorliegenden Dokument Substanzen, die formal zwei oder mehr der in ihrem Namen vorkommenden funktionellen Gruppen pro Molekül enthalten.

Der Begriff "Polymer" umfasst im vorliegenden Dokument einerseits ein Kollektiv von chemisch einheitlichen, sich aber in Bezug auf Polymerisationsgrad, Molmasse und Kettenlänge unterscheidenden Makromolekülen, das durch eine Polyreaktion (Polymerisation, Polyaddition, Polykondensation) hergestellt wurde. Der Begriff umfasst andererseits auch Derivate eines solchen Kollektivs von Makromolekülen aus Polyreaktionen, Verbindungen also, die durch Umsetzungen, wie beispielsweise Additionen oder Substitutionen, von funktionellen Gruppen an vorgegebenen Makromolekülen erhalten wurden und die chemisch einheitlich oder chemisch uneinheitlich sein können. Der Begriff umfasst im Weiteren auch so genannte Prepolymere, das heisst reaktive oligomere Voraddukte, deren funktionelle Gruppen am Aufbau von Makromolekülen beteiligt sind.

Der Begriff "Polyurethanpolymer" umfasst sämtliche Polymere, welche nach dem so genannten Diisocyanat-Polyadditions-Verfahren hergestellt werden. Dies schliesst auch solche Polymere ein, die nahezu oder gänzlich frei sind von Urethangruppen. Beispiele für Polyurethanpolymere sind Polyether-Polyurethane, Polyester-Polyurethane, Polyether-Polyharnstoffe, Polyharnstoffe, Polyester-Polyharnstoffe, Polyisocyanurate und Polycarbodiimide.

Unter "Molekulargewicht" versteht man im vorliegenden Dokument stets das Zahlenmittel des Molekulargewichts Mₙ, welches typischerweise mittels GPC gegen Polystyrol als Standard bestimmt wird.

Die Acrylatzusammensetzung weist weniger als 10 Gewichts-%, vorzugsweise weniger als 5 Gewichts-%, bevorzugt weniger als 2 Gewichts-%, insbesondere bevorzugt weniger als 1 Gewichts-% Wasser, bezogen auf das Gesamtgewicht der Acrylatzusammensetzung, auf. Am meisten bevorzugt weist die Acrylatzusammensetzung weniger als 0.5 Gewichts-%, insbesondere weniger als 0.1 Gewichts-% Wasser, bezogen auf das Gesamtgewicht der Acrylatzusammensetzung, auf.

Als (Meth)acrylatmonomere **R** eignen sich grundsätzlich beliebige (Meth)acrylatmonomere oder Verbindungen, welche mindestens eine radikalisch polymerisierbare (Meth)acrylatgruppe enthalten.

Als (Meth)acrylatmonomere **R** sind solche bevorzugt, welche frei sind von funktionellen Gruppen ausgewählt aus der Gruppe bestehend aus Hydroxylgruppen, Carboxylgruppen, Carboxylatgruppen, Sulfonsäuregruppen, Sulfonatgruppen und quartären Ammoniumverbindungen.

Geeignete (Meth)acrylatmonomere **R** sind insbesondere ausgewählt aus der Gruppe bestehend aus Methyl(meth)acrylat, Ethyl(meth)acrylat, n- und i-Butyl(meth)acrylat, Hexyl(meth)acrylat, 2-Ethylhexyl(meth)acrylat, Isodecyl-(meth)acrylat, Cyclohexyl(meth)acrylat, 3-Tetrahydrofuryl(meth)acrylat, Isobornyl(meth)acrylat, Norbornyl(meth)acrylat, Trimethylcyclohexyl(meth)acrylat, Benzyl(meth)acrylat, Isotridecyl(meth)acrylat, Lauryl(meth)acrylat, Stearyl-(meth)acrylat, Phenoxyethyl(meth)acrylat, Dicyclopentadienyloxyethyl(meth)-acrylat, Dihydrodicyclopentadienyl(meth)acrylat, ethoxyliertem Nonylphenol-(meth)acrylat, (2,2-dimethyl-1,3-dioxolan-4-yl)methyl (meth)acrylat, Glycerol formal (meth)acrylat und (5-ethyl-1,3-dioxan-5-yl)methyl acrylat.

Vorzugsweise beträgt der Anteil von den (Meth)acrylatmonomeren ausgewählt aus der Gruppe bestehend aus 2-(2-Ethoxyethoxy)ethyl(meth)-acrylat, Butyldiglykol(meth)acrylat, 2-Hydroxyethyl(meth)acrylat und 2- und 3-Hydroxypropyl(meth)acrylat weniger als 0.5 Gewichts-%, insbesondere weniger als 0.1 Gewichts-%, bezogen auf das Gesamtgewicht der Acrylatzusammensetzung. Am meisten bevorzugt weist die Acrylatzusammensetzung keine (Meth)acrylatmonomere ausgewählt aus der vorgehend genannten Gruppe auf.

Vorzugsweise ist das mindestens eine (Meth)acrylatmonomer R ausgewählt aus der Gruppe bestehend aus Methylmethacrylat, Tetrahydrofurfuryl(meth)acrylat, Cyclohexyl(meth)acrylat, Isobornyl(meth)acrylat, Trimethylcyclohexyl(meth)acrylat, Benzyl(meth)acrylat, (2,2-dimethyl-1,3-dioxolan-4-yl)methyl (meth)acrylat, Glycerol formal (meth)acrylat, Phenoxyethyl (meth)acrylat und (5-ethyl-1,3-dioxan-5-yl)methyl acrylat.

Weiter kann es auch vorteilhaft sein, wenn es sich bei dem mindestens einen (Meth)acrylatmonomer **R** um 2-Hydroxyethylmethacrylat (HEMA) handelt. In diesem Fall kann es vorteilhaft sein, wenn die Acrylatzusammensetzung zusätzlich einen nachgehend beschriebenen Vernetzer **VN** der Formel (I) aufweist.

Vorzugsweise beträgt der Anteil an (Meth)acrylatmonomer **R** 99 bis 20 Gewichts-%, insbesondere 97 bis 30 Gewichts.-%, bevorzugt 90 bis 35 Gew.-%, bezogen auf das Gesamtgewicht der Acrylatzusammensetzung.

Die Acrylatzusammensetzung weist vorzugsweise zusätzlich mindestens einen Vernetzer **VN** der Formel (I) auf

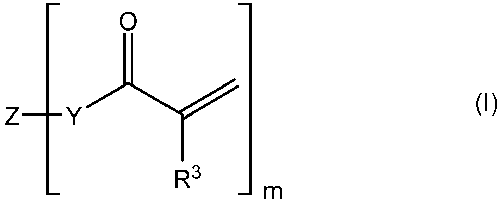

Der Rest R³ steht dabei für ein Wasserstoffatom oder für eine Methylgruppe. Der Index m steht für einen Wert von 2 bis 5. Weiterhin steht Z für ein Polyol nach Entfernung von m Hydroxylgruppen und Y steht für O oder für NR', wobei R' für einen Kohlenwasserstoffrest oder für ein Wasserstoffatom, bevorzugt für ein Wasserstoffatom, steht.

Beispielsweise sind dies vernetzende difunktionelle oder höher funktionelle (Meth)acrylate wie oligomere oder polymere Verbindungen der Formel (I).

Die Verbindung der Formel (I) ist insbesondere ausgewählt aus der Gruppe bestehend aus Ethylenglykoldi(meth)acrylat, 1,3- und 1,4-Butandioldi-(meth)acrylat, 1,6-Hexandioldi(meth)acrylat, ethoxyliertem und propoxyliertem Neopentylglykoldi(meth)acrylat, propoxyliertem Glyceryltri(meth)acrylat, Trimethylolpropantri(meth)acrylat, Trimethylolpropandi(meth)acrylat, ethoxyliertem Trimethylolpropantri(meth)acrylat, modifiziertem Pentaerythritoltri(meth)acrylat, propoxyliertem ethoxyliertem Pentaerythritoltetra(meth)acrylat, Ditrimethylolpropantetra(meth)acrylat und Dipentaerythritolpenta(meth)acrylat.

Insbesondere steht m in der Verbindung der Formel (I) für einen Wert von 2 und Z steht für ein polymeres Polyol nach Entfernung von zwei OH-Gruppen. Dieses polymere Polyol ist dabei insbesondere ein Polyalkylenpolyol, ein Polyoxyalkylenpolyol oder ein Polyurethanpolyol; ein polyhydroxyfunktionelles Ethylen-Propylen-Dien-, Ethylen-Butylen-Dien- oder Ethylen-Propylen-Dien-Copolymer; ein polyhydroxyfunktionelles Copolymer aus Dienen wie 1,3-Butandien oder Diengemischen und Vinylmonomeren wie Styrol, Acrylnitril oder Isobutylen; ein polyhydroxyfunktionelles Polybutadienpolyol; ein polyhydroxyfunktionelles Acrylonitril/Butadien-Copolymer; oder ein Polysiloxanpolyol.

Beispielsweise sind derartige di- oder trifunktionelle (Meth)acrylate ausgewählt aus der Gruppe bestehend aus Polyethylenglykoldi(meth)acrylat wie Diethylenglykoldi(meth)acrylat, Triethylenglykoldi(meth)acrylat, Tetraethylenglykoldi(meth)acrylat; Polypropylenglykoldi(meth)acrylat wie Dipropylenglykoldi(meth)acrylat, Tripropylenglykoldi(meth)acrylat; und Tris-(2-hydroxyethyl)-isocyanurattri(meth)acrylat.

Weiterhin geeignet ist Z ein Diphenol, insbesondere ein alkoxyliertes Diphenol, nach Entfernung von zwei OH-Gruppen, bevorzugt ethoxyliertes Bisphenol A. Beispielsweise ist ein derartiges difunktionelles (Meth)acrylat unter dem Handelsnamen Sartomer® SR 348 kommerziell erhältlich von der Firma Sartomer Company, Inc., USA.

Als weitere radikalisch polymerisierbare Bestandteile geeignet sind beispielsweise auch difunktionelle (Meth)acrylate wie Epoxy(meth)acrylate, insbesondere Epoxy(meth)acrylate, welche aus der Umsetzung von Bisphenol-A-diglycidylether mit (Meth)acrylsäure erhältlich sind. Beispielsweise ist ein derartiges difunktionelles (Meth)acrylat unter dem Handelsnamen Sartomer® CN 104 kommerziell erhältlich von der Firma Sartomer Company, Inc., USA.

Bevorzugt ist das Polyol ein Diol, insbesondere Polyoxypropylendiol oder Polyoxybutylendiol. Meist bevorzugt handelt es sich bei den Polyolen um möglichst unpolare Polyole.

Besonders bevorzugt ist der mindestens eine Vernetzer **VN** der Formel (I) ausgewählt aus der Gruppe bestehend aus 1,3- und 1,4-Butandioldi(meth)-acrylat, 1,6-Hexandioldi(meth)acrylat, Trimethylolpropantri(meth)acrylat, Trimethylolpropandi(meth)acrylat, Glycerin-1,3-dimethacrylat und Diethlyenglycoldi(meth)acrylat.

Am meisten bevorzugt ist der mindestens eine Vernetzer **VN** der Formel (I) ausgewählt aus der Gruppe bestehend aus 1,3- und 1,4-Butandioldi-(meth)acrylat, 1,6-Hexandioldi(meth)acrylat, Glycerin-1,3-dimethacrylat und Diethlyenglycoldi(meth)acrylat.

Vorzugsweise beträgt der Anteil an Vernetzer **VN** der Formel (I) 0.5 bis 20 Gewichts-%, insbesondere 1 bis 15 Gewichts.-%, bevorzugt 2 bis 12 Gew.-%, bezogen auf das Gesamtgewicht der Acrylatzusammensetzung.

Die Acrylatzusammensetzung weist vorzugsweise zusätzlich mindestens einen Flüssigkautschuk auf.

Als Flüssigkautschuke sind insbesondere solche bevorzugt, welche ausgewählt sind aus der Gruppe bestehend aus:
- Butadien/Acrylonitril-Copolymer basierende Flüssigkautschuke,
- (Meth)acrylat-terminierte Produkte, erhalten durch direkte Veresterung oder durch Umesterung, basierend auf Polyolen oder Polyaminen und
- Polyurethan-basierende Flüssigkautschuke

Die Flüssigkautschuke weisen bevorzugt ungesättigte Doppelbindungen auf.

Als geeignete Flüssigkautschuke haben sich einerseits vinylterminierte Butadien/Acrylnitril-Copolymere, wie sie unter der Produkte-Reihe Hycar® VTBNX von Emerald Performance Materials® kommerziell angeboten werden, erwiesen.

Als geeignete Flüssigkautschuke haben sich auch (Meth)acrylat-terminierte Produkte, erhalten durch direkte Veresterung oder durch Umesterung, basierend auf Polyolen oder Polyaminen, erwiesen, wie sie unter den folgenden Produkte-Reihen kommerziell angeboten werden:
Poly(propylenglycol)(meth)acrylate der Bisomer®-Reihe, kommerziell angeboten von GEO Specialty Chemicals UK Ltd,
Polyester Acrylate der Sartomer®-Reihe, kommerziell angeboten von Arkema.

Andererseits als besonders geeignete Flüssigkautschuke gelten (Meth)acrylat-terminierte Polyurethanpolymere. Derartige Polymere können aus Polyolen und Polyisocyanaten unter Bildung von Isocyanat-funktionellen Polyurethanprepolymeren und anschliessender Umsetzung mit Hydroxyalkyl-(meth)acrylaten hergestellt werden.

Bevorzugte Isocyanat-funktionelle Polyurethanprepolymere sind das Reaktionsprodukt eines Polyisocyanates, insbesondere eines Diisocyanates und eines Polyols im Verhältnis Isocyanat-Gruppen-Equivalente zu HydroxylGruppen-Equivalente von grösser als 1. Somit sind auch Addukte vom Typ NCO-xx-NHCO-O-yy-O-OCONH-xx-OCN auch als Polyurethane Prepolymer in diesem Zusammenhang zu verstehen, wobei xx für ein Diisocyanat ohne NCO Gruppen und yy für ein Diol ohne OH Gruppen stehen.

Grundsätzlich kann hierfür jedes Polyol HO-R-(OH)_{q} mit q ≥ 1 verwendet werden, wobei R für ein Polymergerüst mit Heteroatomen im Gerüst oder als Seitenketten steht.

Bevorzugte Polyole sind Polyole, welche ausgewählt sind aus der Gruppe bestehend aus Polyoxyalkylenpolyole, auch "Polyetherpolyole" genannt, Polyesterpolyole, Polycarbonatpolyole und deren Mischungen. Bevorzugte Polyole sind Diole. Die meist bevorzugten Diole sind Polyoxyethylendiole oder Polyoxypropylendiole oder Polyoxybutylendiole .

Die Polyoxyalkylenpolyole können einen niedriegen Ungesättigtheitsgrad (gemessen nach ASTM D-2849-69 und angegeben in Milliequivalent Ungesättigtheit pro Gramm Polyol (mEq/g)), hergestellt beispielsweise mit Hilfe von sogenannten Double Metal Cyanide Complex-Katalysatoren (DMC-Katalysatoren), oder auch einen höheren Ungesättigtheitsgrad, hergestellt beispielsweise mit Hilfe von anionischen Katalysatoren wie NaOH, KOH, CsOH oder Alkalialkoholaten, aufweisen.

Die Verwendung von Polyoxyalkylenpolyolen mit tiefem Ungesättigtheitsgrad, insbesondere von weniger als 0.01 mEq/g, wird für Polyole mit einem Molekulargewicht von ≥ 2000 bevorzugt.

Grundsätzlich können jegliche Polyisocyanate mit zwei oder mehr Isocyanatgruppen verwendet werden.

Beispielsweise seien erwähnt 2,4- and 2,6-Toluylenediisocyanat (TDI) und deren Mischungen, 4,4'-Diphenylmethandiisocyanat (MDI), jegliche Isomeren von Diphenylmethandiisocyanat, 1,3- und 1,4-Phenylendiisocyanat, 2,3,5,6-Tetramethyl-1,4-diisocyanatobenzol, 1,6-Hexamethylendiisocyanat (HDI), 2-Methylpentamethylen-1,5-diisocyanat, 2,2,4- and 2,4,4-Trimethyl-1,6-hexamethylendiisocyanat (TMDI), 1,12-Dodecamethylendiisocyanat, Cyclohexan-1,3- und -1,4-diisocyanat und jegliche Mischungen dieser Isomeren miteinander, 1-Isocyanato-3,3,5-trimethyl-5-isocyanatomethyl-cyclohexan (=Isophorondiisocyanat oder IPDI), Perhydro-2,4'- and -4,4'-diphenylmethandiisocyanat (HMDI), 1,4-Diisocyanato-2,2,6-trimethylcyclohexan (TMCDI), m- und p-Xylylenediisocyanat (XDI), 1,3- and 1,4-Tetramethylxylylenediisocyanat (TMXDI), 1,3- and 1,4-Bis-(isocyanatomethyl)-cyclohexan, jegliche Oligomere oder Polymere der oben genannten Isocyanate sowie jegliche Mischungen der genannten Isocyanate untereinander. Bevorzugte Polyisocyanate sind MDI, TDI, HDI, IPDI und deren Mischungen untereinander. Meist bevorzugt sind IPDI und HDI und deren Mischung.

Die aus den Polyolen und Polyisocyanaten hergestellten Isocyanatterminierten Prepolymeren werden mit (Meth)acrylsäureestern, welche Hydroxylgruppen aufweisen, umgesetzt. Bevorzugte (Meth)acrylsäureestern, welche Hydroxylgruppen aufweisen, sind Hydroxyethyl(meth)acrylat oder Hydroxypropyl(meth)acrylat. Die zwei Reaktanden werden in an und für sich bekannter Art und Weise miteinander reagiert, typischerweise in einem stöchiometrischen Überschuss des (Meth)acrylsäureesters, welcher Hydroxylgruppen aufweist.

Das bevorzugte (Meth)acrylat-terminierte Polyurethanpolymer ist das Reaktionsprodukt eines IPDI/Polypropylenglycol-Polyurethanprepolymers oder eines HDI/Polypropylenglycol-Polyurethanprepolymers mit Hydroxyethyl(meth)-acrylat oder mit Hydroxypropyl(meth)acrylat.

Die Herstellung des Polyurethanprepolymers und/oder des (Meth)acrylat-terminierten Polyurethanpolymers kann in Gegenwart des organischen (Meth)acrylates erfolgen, so lange dieses keine NCO-raktiven Gruppen aufweist.

Als Flüssigkautschuke können solche Flüssigkautschuke bevorzugt sein, die ein Molekulargewichts Mₙ von 1'000 bis 50'000 g/mol, insbesondere 2'000 bis 30'000 g/mol, aufweisen.

Als Polyurethan-basierende Flüssigkautschuke bevorzugte sind solche die ein Molekulargewichts Mₙ von 10'000 bis 50'000 g/mol, insbesondere 15'000 bis 30'000 g/mol, aufweisen.

Die Flüssigkautschuke werden bevorzugt in einer Menge von 20 bis 60 Gewichts-%, vorzugsweise 35 bis 55 Gewichts-%, bezogen auf das Gesamtgewicht der Acrylatzusammensetzung, eingesetzt.

Weiter kann es vorteilhaft sein, wenn die Acrylatzusammensetzung weiter flüssige Weichmacher aufweist. Vorzugsweise sind diese flüssigen Weichmacher bei Temperaturen über -40 °C flüssig.

Als flüssige Weichmacher sind solche bevorzugt, welche frei sind von funktionellen Gruppen ausgewählt aus der Gruppe bestehend aus Hydroxylgruppen, Carboxylgruppen, Carboxylatgruppen, Sulfonsäuregruppen, Sulfonatgruppen und quartären Ammoniumverbindungen.

Vorzugsweise sind diese flüssigen Weichmacher ausgewählt aus der Liste bestehend aus Polypropylenglycolen, vorzugsweise mit einem Molekulargewicht Mₙ von 300 - 10'000 g/mol, insbesondere 400 - 3'000 g/mol, und Adipaten, insbesondere Bis(2-ethylhexyl)adipat, Bis(8-methylnonyl)adipat, Benzyl(2-ethylhexyl)adipat und Diisopropyladipat. Am meisten bevorzugt von den Adipaten ist Bis(2-ethylhexyl)adipat (DOA).

Vorzugsweise beträgt der Anteil dieser flüssigen Weichmacher 10 - 40 Gewichts-%, vorzugsweise 20 - 30 Gewichts-%, bezogen auf das Gesamtgewicht der Acrylatzusammensetzung.

Die Acrylatzusammensetzung weist vorzugsweise zusätzlich einen Radikalbildner auf.

Der Radikalbildner ist insbesondere ein Peroxid, ein Hydroperoxid oder ein Perester. Meist bevorzugt ist der Radikalbildner Dibenzoylperoxid.

Typischerweise weist die Zusammensetzung weiterhin mindestens einen Katalysator für die Radikalbildung auf. Dieser Katalysator ist insbesondere ein tertiäres Amin, ein Übergangsmetallsalz oder ein Übergangsmetallkomplex. Beispielsweise sind solche geeignete tertäre Amine aromatische Amine, insbesondere ausgewählt aus der Gruppe bestehend aus N,N-Dimethylanilin, N,N-Diethylanilin, N,N-Bis(hydroxyalkyl)anilin wie N,N-Bis(2-hydroxyethyl)anilin, N,N-Alkylhydroxyalkylanilin wie N-Ethyl-N-hydroxyethylanilin, N,N-Dimethyl-p-toluidin, N,N-Diethyl-p-toluidin, N-Methyl-N-hydroxyethyl-p-toluidin, N,N-Bis(2-hydroxyethyl)-p-toluidin sowie alkoxylierte N,N-Bis-(hydroxyethyl)-p-toluidine, N-ethoxyliertes p-Toluidin, N,N-Bis(2-hydroxyethyl)-xylidin, N-Alkylmorpholin und Mischungen davon. Übergangmetallsalze und Übergangsmetallkomplexe sind beispielsweise Salze und Komplexe von Cobalt, Nickel, Kupfer, Mangan oder Vanadium.

Weitere bevorzugte Katalysatoren für die Radikalbildung sind beispielsweise beschrieben in den Abschnitten [0041] bis [0054] von US 2002/0007027 A1.

Der Katalysator für die Radikalbildung wird üblicherweise in einer Menge von 0.01 bis 3 Gew.-%, insbesondere von 0.1 bis 2 Gew.-%, bezogen auf die Zusammensetzung, eingesetzt.

Als Radikalbildner können beispielsweise auch Moleküle eingesetzt werden, welche unter Einfluss von Wärme oder von elektromagnetischer Strahlung Radikale bilden, die dann zur Polymerisation der Zusammensetzung führen. Typischerweise sind dies thermisch aktivierbare Radikalbildner und Photoinitiatoren.

Als thermisch aktivierbare Radikalbildner eignen sich solche, welche bei Raumtemperatur noch genügend stabil sind, bei leicht erhöhter Temperatur aber bereits Radikale bilden, beispielsweise Azo-Bis-Isobutyronitril (AIBN).

Als Photoinitiator werden Radikalbildner bezeichnet, welche unter dem Einfluss von elektromagnetischer Strahlung Radikale bilden. Insbesondere geeignet ist ein Photoinitiator, welcher bei einer Bestrahlung mit einer elektromagnetischen Strahlung der Wellenlänge von 230 nm bis 400 nm Radikale bildet und bei Raumtemperatur flüssig ist. Beispielsweise sind derartige Photoinitiatoren ausgewählt aus der Gruppe bestehend aus α-Hydroxyketonen, Phenylglyoxylaten, Monoacylphosphinen, Diacylphosphinen, Phosphinoxiden und Mischungen davon.

Vorzugsweise beträgt der Anteil an Radikalbildner 0.2 - 3 Gewichts-%, vorzugsweise 0.5 - 1.5 Gewichts-%, bezogen auf das Gesamtgewicht der Acrylatzusammensetzung.

Es kann vorteilhaft sein, wenn die Acrylatzusammensetzung aus folgenden Komponenten besteht:
- mindestens ein (Meth)acrylatmonomer **R**
- gegebenenfalls mindestens einen Vernetzer **VN** der Formel (I)
- gegebenenfalls mindestens einen Flüssigkautschuk
- gegebenenfalls zusätzlich flüssige Weichmacher
- gegebenenfalls mindestens einen Radikalbildner, vorzugsweise mit weiterhin mindestens einen Katalysator für die Radikalbildung
- gegebenenfalls weitere Komponenten, wobei der Anteil der weiteren Komponenten weniger als 10 Gewichts-%, vorzugsweise weniger als 5 Gewichts-%, bevorzugt weniger als 2 Gewichts-%, insbesondere bevorzugt weniger als 1 Gewichts-%, am meisten bevorzugt 0 Gewichts-%, bezogen auf das Gesamtgewicht der Acrylatzusammensetzung, beträgt.
- Vorzugsweise weist die Acrylatzusammensetzung weiter weniger als 10 Gewichts-%, vorzugsweise weniger als 5 Gewichts-%, bevorzugt weniger als 2 Gewichts-%, insbesondere bevorzugt weniger als 1 Gewichts-%, am meisten bevorzugt weniger als 0.5 Gewichts-% Wasser, bezogen auf das Gesamtgewicht der Acrylatzusammensetzung, auf.

Vorzugsweise handelt es sich bei der Acrylatzusammensetzung um eine Zusammensetzung enthaltend:
- (Meth)acrylatmonomer **R** ausgewählt aus der Gruppe bestehend aus Methylmethacrylat, Tetrahydrofurfuryl(meth)acrylat, Cyclohexyl(meth)acrylat, Isobornyl(meth)acrylat, Trimethylcyclohexyl(meth)acrylat und Benzyl-(meth)acrylat, vorzugsweise Benzyl(meth)acrylat, wobei der Anteil an (Meth)acrylatmonomer **R** 30 bis 50 Gewichts-%, insbesondere 35 bis 40 Gewichts.-%, bezogen auf das Gesamtgewicht der Acrylatzusammensetzung, beträgt.
- Polyurethan-basierende Flüssigkautschuke, insbesondere (Meth)acrylat-terminierte Polyurethanpolymere, vorzugsweise Polyurethan-basierende Flüssigkautschuke mit einem Molekulargewicht Mn von 10'000 bis 50'000 g/mol, insbesondere 10'000 bis 20'000 g/mol, wobei der Anteil an Polyurethan-basierenden Flüssigkautschuken 30 bis 50 Gewichts-%, insbesondere 35 bis 40 Gewichts.-%, bezogen auf das Gesamtgewicht der Acrylatzusammensetzung, beträgt.
- flüssige Weichmacher, wobei der Anteil 15 bis 40 Gewichts-%, insbesondere 20 bis 30 Gewichts.-%, bezogen auf das Gesamtgewicht der Acrylatzusammensetzung, beträgt.
- Radikalbildner, vorzugsweise mit weiterhin mindestens einen Katalysator für die Radikalbildung
- 0 bis 5 Gewichts-%, insbesondere 0 bis 2 Gewichts.-%, bevorzugt 0 bis 1 Gewichts.-%, am meisten bevorzugt 0 bis 0.5 Gewichts.-%, bezogen auf das Gesamtgewicht der Acrylatzusammensetzung, Wasser aufweist.

Vorzugsweise besteht die Acrylatzusammensetzung auf diesen Komponenten.

Vorzugsweise handelt es sich bei der Acrylatzusammensetzung um eine Zusammensetzung enthaltend:
- als (Meth)acrylatmonomer **R** 2-Hydroxyethylmethacrylat (HEMA), wobei der Anteil an 2-Hydroxyethylmethacrylat 80 bis 99.5 Gewichts-%, insbesondere 90 bis 98 Gewichts.-%, bevorzugt 95 bis 97 Gewichts-%, bezogen auf das Gesamtgewicht der Acrylatzusammensetzung, beträgt.
- Vernetzer **VN** der Formel (I), insbesondere ausgewählt aus der Gruppe bestehend aus 1,3- und 1,4-Butandioldi(meth)acrylat, 1,6-Hexandioldi(meth)acrylat, Trimethylolpropantri(meth)acrylat, Trimethylol-propandi(meth)acrylat, Glycerin-1,3-dimethacrylat und Diethlyenglycol-di(meth)acrylat, am meisten bevorzugt ausgewählt aus der Gruppe bestehend aus 1,3- und 1,4-Butandioldi(meth)acrylat, 1,6-Hexandioldi(meth)acrylat, wobei deren Anteil an Vernetzer VN der Formel (I) 0.5 bis 5 Gewichts-%, insbesondere 1 bis 4 Gewichts.-%, vorzugsweise 2 bis 3 Gewichts.-%, bezogen auf das Gesamtgewicht der Acrylatzusammensetzung, beträgt.

- Radikalbildner, vorzugsweise mit weiterhin mindestens einen Katalysator für die Radikalbildung
- 0 bis 5 Gewichts-%, insbesondere 0 bis 2 Gewichts.-%, bevorzugt 0 bis 1 Gewichts.-%, am meisten bevorzugt 0 bis 0.5 Gewichts.-%, bezogen auf das Gesamtgewicht der Acrylatzusammensetzung, Wasser aufweist.

Vorzugsweise besteht die Acrylatzusammensetzung aus diesen Komponenten.

Vorzugsweise handelt es sich bei der Acrylatzusammensetzung um eine zweikomponentige Zusammensetzung, wobei zwei Komponenten **K1** und **K2** bis zur Applikation getrennt voneinander aufbewahrt werden. Typischerweise beinhaltet die erste Komponente **K1** insbesondere jene Inhaltsstoffe der beschriebenen Acrylatzusammensetzung, welche radikalisch polymerisierbare Gruppen aufweisen. Die zweite Komponente **K2** beinhaltet insbesondere die Radikalbildner. Weiterhin können in einer zweikomponentigen Zusammensetzung auch andere Bestandteile, insbesondere solche, welche durch Reaktion untereinander die Lagerstabilität der Zusammensetzung beeinträchtigen würden, getrennt aufbewahrt werden.

Insbesondere handelt es sich bei der Acrylatzusammensetzung um eine zweikomponentige Zusammensetzung, wobei die erste Komponente **K1** das (Meth)acrylatmonomer **R** umfasst und die zweite Komponente **K2** mindestens einen Radikalbildner umfasst.

Bevorzugt weisen in beschriebenen zweikomponentigen Zusammensetzungen die Komponente **K1** das (Meth)acrylatmonomer **R** sowie weitere gegebenenfalls vorhandene Bestandteile wie Katalysatoren für die Radikalbildung und Füllstoffe und die Komponente **K2** den Radikalbildner auf. Das Volumenverhältnis von **K1** zu **K2** beim Mischen liegt insbesondere im Bereich von 1:1 bis 200:1.

Eine derartige zweikomponentige Zusammensetzung wird typischerweise in einer Verpackung aufbewahrt, welche zwei voneinander getrennte Kammern aufweist. Die Komponente **K1** ist hierbei in der einen Kammer und die Komponente **K2** ist in der anderen Kammer der Verpackung vorhanden. Geeignete Verpackungen sind beispielsweise Doppelkartuschen, wie Zwillings- oder Koaxialkartuschen, oder Mehrkammerschlauchbeutel mit Adapter. Bevorzugt erfolgt das Mischen der beiden Komponenten **K1** und **K2** mit Hilfe eines Statikmischers, welcher auf die Verpackung mit zwei Kammern aufgesetzt werden kann.

Solche geeigneten Verpackungen sind beispielsweise beschrieben in US 2006/0155045 A1, WO 2007/096355 A1 und in US 2003/0051610 A1, deren gesamte Offenbarung hiermit durch Bezugnahme eingeschlossen wird.

In einer grosstechnischen Anlage werden die beiden Komponenten **K1** und **K2** typischerweise in Fässern oder Hobbocks voneinander getrennt aufbewahrt und bei der Applikation, beispielsweise mittels Zahnradpumpen, gefördert und vermischt. Die Zusammensetzung kann dabei von Hand oder in einem automatisierten Prozess mittels Roboter appliziert.

Der Ablauf, insbesondere die Geschwindigkeit, der zur Aushärtung der Zusammensetzung führenden Reaktionen, kann durch die Wahl der eingesetzten Bestandteile eingestellt werden. Typischerweise verläuft die Aushärtung der Zusammensetzung in der Art, dass die Zusammensetzung trotz einer langen Offenzeit bereits in einem frühen Stadium eine hohe Anfangsfestigkeit erhält. Es kann daher auch vorteilhaft sein, Polymerisationsinhibitoren zu verwenden, um die Aushärtung zu verlangsamen.

Im vorliegenden Verfahren wird in den Zwischenraum zwischen der Innenwand des Hohlraums und den Aussenwänden der Tübbingbauteile Schüttgut eingebracht. Vorzugsweise handelt es sich bei dem Schüttgut um nichtgebundenes Schüttgut, insbesondere um Felssplit, Geröll, Kies oder Sand, insbesondere Perlkies.

Es kann weiter vorteilhaft sein, wenn das Schüttgut zu 20 - 70%, vorzugsweise 30 - 60 Gewichts-%, aus Sand, insbesondere Grobsand, besteht.

Vorzugsweise wird das Schüttgut vor dem Verfahren getrocknet.

Bei dem Verfahren ist es vorteilhaft, wenn durch das Einbringen der Acrylatzusammensetzung in den Zwischenraum der Zwischenraum gegen Wasser abgedichtet wird, insbesondere der mit Schüttgut und ausgehärteter Acrylatzusammensetzung ausgefüllte Zwischenraum gegen Wasserdurchtritt abgedichtet ist.

Es kann vorteilhaft sein, wenn zuerst das Schüttgut in den Zwischenraum eingebracht wird und danach die Acrylatzusammensetzung in den Zwischenraum eingebracht werden.

Weiter kann es vorteilhaft sein, wenn das Schüttgut und die Acrylatzusammensetzung zunächst vermengt und dann gemeinsam in den Zwischenraum eingebracht werden.

Auch kann es auch vorteilhaft sein, wenn das Schüttgut und die Acrylatzusammensetzung gleichzeitig in den Zwischenraum eingebracht werden.

Weiter kann es vorteilhaft sein, wenn die ausgehärtete Acrylatzusammensetzung zusammen mit dem Schüttgut ein Quellmass von minus 2 bis plus 5 %, vorzugsweise null bis plus 2 %, bevorzugt null bis plus 1 %, am meisten bevorzugt null bis plus 0.5 %, aufweist.

Weiter kann es vorteilhaft sein, wenn der Untergrund, insbesondere im Bereich der Innenwand des Hohlraums, Naturanhydrit aufweist. Vorzugsweise bestehen Teile der Innenwand des Hohlraums aus Naturanhydrit. Unter dem Begriff "Naturanhydrit" wird im vorliegenden Dokument insbesondere das Gestein mit > 90%, bevorzugt >95%, vorzugsweise ca. 98 % Calciumsulfat (Anhydrit) verstanden. Die Umwandlung von Anhydrit in Gips ist mit einer erheblichen Volumenzunahme verbunden.

Weiter kann es vorteilhaft sein, wenn die Acrylatzusammensetzung bei ihrer Aushärtung eingebracht in den Zwischenraum (in Anwesenheit des Schüttgutes) eine Maximaltemperatur von ≤ 100°C, vorzugsweise ≤ 90°C, besonders bevorzugt ≤ 80°C, am meisten bevorzugt ≤ 70°C erreicht. Vorzugsweise wird diese Maximaltemperatur gemessen durch Zugeben der Acrylatzusammensetzung zu 170 g Schüttgut in einem zylindrischen Plastikbecher (Durchmesser 50 mm, Höhe 70 mm) bis das Schüttgut vollständig mit Acrylatzusammensetzung bedeckt ist und anschliessendem Messen der Temperaturentwicklung in der Mitte der Mischung bis zum Ende der Aushärtungsreaktion der Acrylatzusammensetzung.

Vorzugsweise ist das Mischverhältnis von Schüttgut zu Acrylatzusammensetzung derart, dass die Leerräume zwischen den Partikeln des Schüttguts vollständig mit der Acrylatzusammensetzung aufgefüllt sind. Weiter ist es vorteilhaft, wenn die Acrylatzusammensetzung in einer Menge in den Zwischenraum eingebracht wird, dass sie (zusammen mit dem Schüttgut) in ausgehärtetem Zustand den Zwischenraum gegen Wasserdurchtritt abzudichten vermag.

Weiter kann es vorteilhaft sein, wenn die Gelzeit der Acrylatzusammensetzung mehr als 15 min, vorzugsweise 15 - 120 min, bevorzugt 30 - 120 min beträgt. Als "Gelzeit" wird dabei die Zeitspanne von dem Vermischen der Komponenten bis zum Detektieren von Auge von gelartigen Strukturen in der Zusammensetzung verstanden.

In einem zweiten Aspekt betrifft die vorliegende Erfindung ein Tunnelbauwerk, erhalten aus einem vorgehend beschriebenen Verfahren.

Weiterhin umfasst die vorliegende Erfindung eine Verwendung einer Acrylatzusammensetzung, wie sie vorgehend beschrieben wird, zum Einbringen in Zwischenräume und Abdichten ebensolcher in einem Tunnelbauwerk, wobei das Tunnelbauwerk in Tübbingbauweise hergestellt wurde, wobei Tübbingbauteile in einer maschinell erzeugten Hohlraumbohrung durch einen Untergrund zusammengesetzt wurden, um eine geschlossene Auskleidung zu bilden, und die Acrylatzusammensetzung in den erwähnten Zwischenraum zwischen der Innenwand des Hohlraums und den Aussenwänden der Tübbingbauteile zusammen mit Schüttgut eingebracht wird.

Bevorzugt ist weiter eine Verwendung, bei welcher die Acrylatzusammensetzung, insbesondere unter Druck, eingebracht, insbesondere eingespritzt, wird.

Besonders bevorzugt ist eine solche Verwendung, wenn der Untergrund, insbesondere im Bereich der Innenwand des Hohlraums, Naturanhydrit aufweist.

Wie vorgehend beschreiben, kann bei einer solchen Verwendung die Acrylatzusammensetzung vor, zusammen mit oder nach dem Einbringen des Schüttguts in den Zwischenraum eingebracht werden. Vorzugsweise wird zuerst das Schüttgut und danach die Acrylatzusammensetzung eingebracht.

### Beispiele

Im Folgenden sind Ausführungsbeispiele aufgeführt, welche die beschriebene Erfindung näher erläutern sollen. Selbstverständlich ist die Erfindung nicht auf diese beschriebenen Ausführungsbeispiele beschränkt.

**Verwendete Substanzen:**

| | |
|---|---|
| Benzyl methacrylat | Visiomer BNMA, Evonik Industries AG, Deutschland |
| HEMA | Hydroxyethyl methacrylat, Visiomer HEMA 98, Evonik Industries AG |
| Glycerin-1,3-dimethacrylat | Visiomer GDMA, Evonik Industries AG |
| Bisomer | Para-toluidin ethoxylat, Bisomer PTE, GEO Specialty Chemicals |
| PPG 400 | Polypropylenglykol mit Mₙ von 400 g/mol, Voranol P 400 Polyol, DOW Europe GmbH |
| PPG 2000 | Polypropylenglykol mit Mₙ von 2'000 g/mol, Voranol P 2000 Polyol, DOW Europe GmbH |
| DOA | Dioctyl-adipat, Plastomoll DOA, BASF SE, Deutschland |
| DBPO | Dibenzoylperoxid, Peroxan BP Paste 50 PF, Pergan GmbH |

### Beschreibung der Prüfmethoden

Die **Viskosität** ("Visk") wurde bei 23°C mit einem Physica MCR101 Viskosimeter gemäß ISO 3219 mit einem koaxialen Zylindermesssystem bei einem Kegelwinkel von 120° bestimmt.

Bei der Messung der **Gelzeit** ("Gelzeit") wurden alle erforderlichen Rohstoffe mit Ausnahme des Dibenzoylperoxid homogen bei 23°C vermischt, so dass sich eine klare Lösung ergab. Anschliessend wurde das Dibenzoylperoxid hinzugegeben und bei Bedarf mit Hilfe eines Speedmixers (Marke: Hausschild Engineering, Typ: DAC 150 FVZ, Mischdauer: 60 sec bei 1500 U/min) homogen in der Lösung verteilt bzw. gelöst. Dabei wurde zeitgleich die Messung der Gelzeit mittels Stoppuhr betätigt. Sofort nach Herstellung der Acrylatzusammensetzung wurden 45 g in einen zylindrischen Plastikbecher (Durchmesser 50 mm, Höhe 70 mm) gegeben und die Aushärtungsreaktion visuell verfolgt. Sobald sich in der Probelösung gelartige Strukturen detektieren lassen, ist die Gelzeit erreicht.

Bei der Messung der **Exothermie ohne Kieszugabe** ("Exo (o.K.)") (Reaktionswärme) wurden die Acrylatzusammensetzungen wie in Tabelle 1 ausgeführt hergestellt und zeitgleich die Zeitaufnahme gestartet. 45 g der Lösung wurden daraufhin in einen zylindrischen Plastikbecher (Durchmesser 50 mm, Höhe 70 mm) überführt und ein Temperaturfühler zentrisch in der Reaktionslösung (und in der Mitte der Höhe der Reaktionslösung) positioniert. Bei Erreichen des Temperaturmaximums (T max) wurde die Zeit auf der Stoppuhr abgelesen.

Bei der Messung der **Exothermie mit Kieszugabe** ("Exo (m.K.)") (Reaktionswärme) wurden die Acrylatzusammensetzungen wie in Tabelle 1 ausgeführt hergestellt und zeitgleich die Zeitaufnahme gestartet. 45 g der Lösung wurden daraufhin in einen zylindrischen Plastikbecher (Durchmesser 50 mm, Höhe 70 mm) überführt und ca. 170 g eines Kiesgemisch (1 Teil Kies 1-4 mm plus 1 Teil Kies 4-8 mm) in die Lösung gegeben, wodurch Kiesoberfläche und die Oberfläche der Acrylatzusammensetzung dasselbe Niveau erreichen. Anschliessend wurde ein Temperaturfühler zentrisch in der kiesgefüllten Acrylatzusammensetzung (und in der Mitte der Höhe des Gemisches) positioniert. Bei Erreichen des Temperaturmaximums (T max) wurde zusätzlich die Zeit auf der Stoppuhr abgelesen.

Die Messung der **Druckfestigkeit ohne Kies** ("Druckf (o.K.)") wurde in Anlehnung an ASTM D 695 durchgeführt. Dimension Prüfkörper, 12.7 mm x 12.7 mm x 25.4 mm (1/2 inch x 1/2 inch x 1 inch). Aushärtezeit vor Prüfung : 24 h.

Die **Druckfestigkeit mit Kies** ("Druckf (m.K.)") wurde in Anlehnung an ASTM D 695 durchgeführt. Die Prüfkörperform wurde vorgängig mit Kies der Körngrösse 1.5 - 2.2 mm gefüllt (ca. 6 gr). Anschliessend wurde in die so vorgefüllte Form die Acrylatzusammensetzung gegeben (ca. 2.3 g). Dimension Prüfkörper, 12.7 mm x 12.7 mm x 25.4 mm (1/2 inch x 1/2 inch x 1 inch). Aushärtezeit vor Prüfung : 24 h.

Für die **Quellung in Wasser** ("Quell") wurden die wie vorgehend beschrieben hergestellten Prüfkörper bei 23°C in demineralisiertes Wasser eingelegt, so dass ein freies Quellen in dem Prüfmedium möglich ist. Die Gewichtsänderung der eingelagerten Prüfkörper wurde nach 1d und 7 d Wasserlagerung gravimetrisch bestimmt. Dimension Prüfkörper, 12.7 mm x 12.7 mm x 25.4 mm (1/2 inch x 1/2 inch x 1 inch). Aushärtezeit vor Wasserlagerung : 24 h.

### Herstellung des verwendeten Vinyl-terminierten Polyurethan-basierten Flüssigkautschuk "PU-Flüssigkautschuk"

In einem 3-Halsrundkolben (mit Rührer, Thermometer und Tropftrichter mit Druckausgleich) wurden unter Stickstoff 87.4 g Polyol Acclaim 4200 N (Bayer Material Science) vorgelegt und mit 8.4 g Isophorondiisocyanat versetzt. Nach Zugabe von 0.005 g Dibutylzinndilaurat (Azelis) wurde der Ansatz auf 70°C erwärmt und bis zur Konstanz des Isocyanat-Werts gerührt. Anschliessend wurde eine Lösung aus 0.077 g 4-hydroxy-2,2,6,6-tetramethylpiperidinoxyl (4-Hydroxy-TEMPO, Evonik Industries AG) in 4.118 g Hydroxyethylmethacrylat (Evonik Industries AG, Visiomer HEMA) hinzugefügt und bis zur neuerlichen Konstanz des Isocyanat-Werts gerührt. Nach Abkühlen auf 23°C wurde eine leicht gelbliche Flüssigkeit mit einer Viskosität von ca. 42000 mPas, einer Dichte von ca. 1.04 g/cm³ und einem Molekulargewicht von ca. Mn = 18'000 g/mol erhalten.

**Tabelle 1, die Komponenten sind in Gewichtsteilen, bezogen auf das Gesamtgewicht der Acrylatzusammensetzung, angegeben.**

| | ***Ex. 1*** | ***Ex. 2*** | ***Ex. 3*** | ***Ex. 4*** | ***Ex. 5*** | ***Ex. 6*** | ***Ex. 7*** | ***Ex. 8*** | ***Ex. 9*** | ***Ex. 10*** | ***Ex 11*** | ***Ex. 12*** |
|---|---|---|---|---|---|---|---|---|---|---|---|---|
| **Komponente K1** | | | | | | | | | | | | |
| Benzyl methacrylat | 96.5 | | 49.5 | | | 37 | 37 | 37 | 89 | 39. 5 | 99 | 71. 5 |
| HEMA | | 96.5 | | 49.5 | | | | | | | | |
| Glycerin-1,3-dimethacrylat | 2.5 | 2.5 | | | | | | | 10 | 10 | | 2.5 |
| PU-Flüssigkautschuk | | | 49.5 | 49.5 | 99 | 37 | 37 | 37 | | 49. 5 | | |
| Bisomer | 0.5 | 0.5 | 0.5 | 0.5 | 0.5 | 0.5 | 0.5 | 0.5 | 0.5 | 0.5 | 0. 5 | 0.5 |
| PPG 400 | | | | | | 25 | | | | | | |
| PPG 2000 | | | | | | | 25 | | | | | |
| DOA | | | | | | | | 25 | | | | 25 |

| **Komponente K2** | | | | | | | | | | | | |
|---|---|---|---|---|---|---|---|---|---|---|---|---|
| DBPO | 0.5 | 0.5 | 0.5 | 0.5 | 0.5 | 0.5 | 0.5 | 0.5 | 0.5 | 0.5 | 0. 5 | 0.5 |

**Tabelle 2, Messwerte, kG = keine Gelierung, nm = nicht messbar, nb = nicht bestimmt, * = nicht zerstörungsfrei prüfbar bei einer Druckdehnung bis 60 %, Druckfestigkeit bei einer Druckdehnung von 50 % von 37.2 MPa, ** = nicht zerstörungsfrei prüfbar bei einer Druckdehnung bis 60 %, Druckfestigkeit bei einer Druckdehnung von 50 % von 1.3 MPa.**

| | ***Ex. 1*** | ***Ex. 2*** | ***Ex. 3*** | ***Ex. 4*** | ***Ex.5*** | ***Ex. 6*** | ***Ex. 7*** | ***Ex. 8*** | ***Ex. 9*** | ***Ex. 10*** | ***Ex. 11*** | ***Ex. 12*** |
|---|---|---|---|---|---|---|---|---|---|---|---|---|
| Visk. [mPa s] | 5 | 6 | 276 | 514 | 42'000 | 198 | 281 | 139 | 3 | 385 | 4 | 3 |
| Gelzeit [min] | 12 | 33 | 22 | 40 | nm | 18 | 19 | 23 | 9 | 22 | kG | 15 |
| Exo T max (o.K.) [°C] | 128 | 86 | 96 | 99 | nm | 79 | 77 | 76 | 154 | 103 | 97 | 11 5 |
| t bis Exo T max(o.K.) [min] | 16 | 39 | 31 | 47 | nm | 24 | 28 | 32 | 12 | 25 | 21 | 20 |
| Exo T max (m.K.)[°C] | 87 | 76 | 55 | 58 | nm | 42 | 45 | 43 | 93 | 58 | 71 | 64 |
| t bis T max (m.K.)[min ] | 21 | 49 | 39 | 60 | nm | 31 | 33 | 39 | 15 | 30 | 31 | 28 |
| Druckf. (o.K.) [MPa] | nb | nb | 1.0 | 3.1 | nm | 0.6 | 0.6 | 0.6 | 34.2 | * | 39. 8 | ** |
| Druckf. (m.K.) [MPa] | 39.6 | 12.7 | 3.0 | 8.8 | nm | 0.8 | 1.0 | 0.8 | 45.8 | 10. 2 | 34. 2 | 2.2 |
| Quell 1d [%] | 0 | 4.4 | 0 | 2.2 | nm | nb | nb | nb | nb | nb | nb | nb |
| Quell 7d [%] | 0 | 4.4 | 0 | 8.9 | nm | nb | nb | nb | nb | nb | nb | nb |

Aus den Versuchen ist ersichtlich, dass die Zugabe von Vernetzern sich positiv auf die Druckfestigkeiten auswirkt, jedoch zu einer Erhöhung der Reaktionsexothermie führen kann (beispielsweise Ex.1 versus Ex. 11). Durch die zusätzliche Zugabe von flüssigen Weichmachern kann die Erhöhung der Reaktionsexothermie verringert werden (beispielsweise Ex.3 versus Ex. 10).

## Patentansprüche

1. Verfahren zum Erstellen eines Tunnelbauwerks, insbesondere eines Verkehrswegetunnels, in Tübbingbauweise, bei dem Tübbingbauteile in einer maschinell erzeugten Hohlraumbohrung durch einen Untergrund zusammengesetzt werden, um eine geschlossene Auskleidung zu bilden, und Schüttgut in den Zwischenraum zwischen der Innenwand des Hohlraums und den Aussenwänden der Tübbingbauteile eingebracht wird, insbesondere der Zwischenraum mit Schüttgut aufgefüllt wird,
**dadurch gekennzeichnet, dass** zusätzlich zum Einbringen von Schüttgut in den Zwischenraum eine Acrylatzusammensetzung, insbesondere unter Druck, eingebracht, insbesondere eingespritzt, wird, um den Zwischenraum zu verfüllen, wobei die Acrylatzusammensetzung weniger als 10 Gewichts-% Wasser, bezogen auf das Gesamtgewicht der Acrylatzusammensetzung, aufweist und es sich bei der Acrylatzusammensetzung um eine radikalisch aushärtbare Acrylatzusammensetzung handelt, welche mindestens ein (Meth)acrylatmonomer R aufweist.

2. Verfahren gemäss Anspruch 1, **dadurch gekennzeichnet, dass** die Acrylatzusammensetzung weniger als 5 Gewichts-%, vorzugsweise weniger als 2 Gewichts-%, bevorzugt weniger als 1 Gewichts-% Wasser, bezogen auf das Gesamtgewicht der Acrylatzusammensetzung, aufweist.

3. Verfahren gemäss einem der vorgehenden Ansprüche, **dadurch gekennzeichnet, dass** der Anteil an (Meth)acrylatmonomer R 99 bis 20 Gewichts-%, insbesondere 97 bis 30 Gewichts.-%, bevorzugt 90 bis 35 Gew.-%, bezogen auf das Gesamtgewicht der Acrylatzusammensetzung, beträgt.

4. Verfahren gemäss einem der vorgehenden Ansprüche, **dadurch gekennzeichnet, dass** die Acrylatzusammensetzung zusätzlich mindestens einen Vernetzer VN der Formel (I) 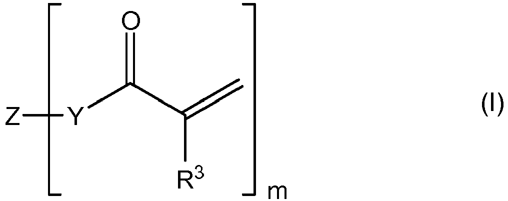 aufweist, der Rest R³ steht dabei für ein Wasserstoffatom oder für eine Methylgruppe, der Index m steht für einen Wert von 2 bis 5, Z steht für ein Polyol nach Entfernung von m Hydroxylgruppen und Y steht für O oder für NR', wobei R' für einen Kohlenwasserstoffrest oder für ein Wasserstoffatom.

5. Verfahren gemäss Anspruch 4, **dadurch gekennzeichnet, dass** der Vernetzer **VN** der Formel (I) ausgewählt aus der Gruppe bestehend aus 1,3- und 1,4-Butandioldi(meth)acrylat, 1,6-Hexandioldi(meth)-acrylat, Glycerin-1,3-dimethacrylat und Diethlyenglycoldi(meth)acrylat.

6. Verfahren gemäss Anspruch 4 oder 5, **dadurch gekennzeichnet, dass** der Anteil an Vernetzer **VN** der Formel (I) 0.5 bis 20 Gewichts-%, insbesondere 1 bis 15 Gewichts.-%, bevorzugt 2 bis 12 Gew.-%, bezogen auf das Gesamtgewicht der Acrylatzusammensetzung, beträgt.

7. Verfahren gemäss einem der vorgehenden Ansprüche, **dadurch gekennzeichnet, dass** die Acrylatzusammensetzung zusätzlich mindestens einen Flüssigkautschuk aufweist, vorzugsweise ausgewählt sind aus der Gruppe bestehend aus
- Butadien/Acrylonitril-Copolymer basierende Flüssigkautschuke,
- (Meth)acrylat-terminierte Produkte, erhalten durch direkte Veresterung oder durch Umesterung, basierend auf Polyolen oder Polyaminen und
- Polyurethan-basierende Flüssigkautschuke.

8. Verfahren gemäss Anspruch 7, **dadurch gekennzeichnet, dass** die Flüssigkautschuke in einer Menge von 20 bis 60 Gewichts-%, vorzugsweise 35 bis 55 Gewichts-%, bezogen auf das Gesamtgewicht der Acrylatzusammensetzung, eingesetzt werden.

9. Verfahren gemäss einem der vorgehenden Ansprüche, **dadurch gekennzeichnet, dass** die Acrylatzusammensetzung flüssige Weichmacher aufweist, vorzugsweise ausgewählt aus der Liste bestehend aus Polypropylenglycolen, vorzugsweise mit einem Molekulargewicht Mₙ von 300 - 10'000 g/mol, und Adipaten, insbesondere Bis(2-ethylhexyl)adipat, Bis(8-methylnonyl)adipat, Benzyl(2-ethylhexyl)adipat und Diisopropyladipat.

10. Verfahren gemäss Anspruch 9, **dadurch gekennzeichnet, dass** der Anteil der flüssigen Weichmacher 10 - 40 Gewichts-%, vorzugsweise 20 - 30 Gewichts-%, bezogen auf das Gesamtgewicht der Acrylatzusammensetzung, betragen.

11. Verfahren gemäss einem der vorgehenden Ansprüche, **dadurch gekennzeichnet, dass** die Acrylatzusammensetzung mindestens einen Radikalbildner, vorzugsweise mit weiterhin mindestens einen Katalysator für die Radikalbildung, aufweist.

12. Verfahren gemäss einem der vorgehenden Ansprüche, **dadurch gekennzeichnet, dass** es sich bei dem Schüttgut um nichtgebundenes Schüttgut, insbesondere um Felssplit, Geröll, Kies oder Sand, insbesondere Perlkies, handelt.

13. Verfahren gemäss einem der vorgehenden Ansprüche, **dadurch gekennzeichnet, dass** der Untergrund, insbesondere im Bereich der Innenwand des Hohlraums, Naturanhydrit aufweist.

14. Tunnelbauwerk, erhalten aus einem Verfahren gemäss einem der vorgehenden Ansprüche.

15. Verwendung einer Acrylatzusammensetzung wie sie als Acrylatzusammensetzung in einem der Ansprüche 1-13 beschrieben ist, zum Einbringen in Zwischenräume und Abdichten ebensolcher in einem Tunnelbauwerk, wobei das Tunnelbauwerk in Tübbingbauweise hergestellt wurde, wobei Tübbingbauteile in einer maschinell erzeugten Hohlraumbohrung durch einen Untergrund zusammengesetzt wurden, um eine geschlossene Auskleidung zu bilden, und die Acrylatzusammensetzung in den erwähnten Zwischenraum zwischen der Innenwand des Hohlraums und den Aussenwänden der Tübbingbauteile zusammen mit Schüttgut eingebracht wird.

## Claims

1. Method for producing a tunnel, more particularly a trafficway tunnel, in tubbing construction, wherein tubbing components are assembled in a mechanically generated cavity bore through a substrate so as to form a continuous lining, and bulk material is introduced into the interspace between the inner wall of the cavity and the outer walls of the tubbing components, the interspace more particularly being filled up with bulk material,
**characterized in that**, in addition to the introduction of bulk material into the interspace, an acrylate composition is introduced, more particularly injected, more particularly under pressure, in order to fill out the interspace, the acrylate composition comprising less than 10% by weight of water, based on the total weight of the acrylate composition, and the acrylate composition being a radically curable acrylate composition which comprises at least one (meth)acrylate monomer **R.**

2. Method according to Claim 1, **characterized in that** the acrylate composition comprises less than 5% by weight, preferably less than 2% by weight, more preferably less than 1% by weight of water, based on the total weight of the acrylate composition.

3. Method according to either of the preceding claims, **characterized in that** the fraction of (meth)acrylate monomer **R** is 99% to 20% by weight, more particularly 97% to 30% by weight, preferably 90% to 35% by weight, based on the total weight of the acrylate composition.

4. Method according to any of the preceding claims, **characterized in that** the acrylate composition further comprises at least one crosslinker **VN** of the formula (I) 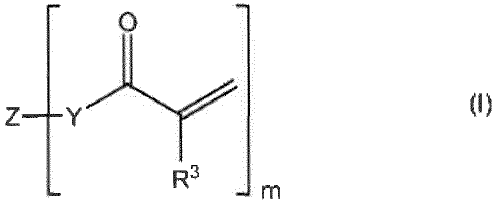 where the radical R³ is a hydrogen atom or is a methyl group, the index m has a value of 2 to 5, Z is a polyol after removal of m hydroxyl groups, and Y is O or is NR', where R' is a hydrocarbon radical or is a hydrogen atom.

5. Method according to Claim 4, **characterized in that** the crosslinker **VN** of the formula (I) is selected from the group consisting of 1,3- and 1,4-butanediol di(meth)acrylate, 1,6-hexanediol di(meth)acrylate, glycerol 1,3-dimethacrylate and diethylene glycol di(meth)acrylate.

6. Method according to Claim 4 or 5, **characterized in that** the fraction of crosslinker **VN** of the formula (I) is 0.5% to 20% by weight, more particularly 1% to 15% by weight, preferably 2% to 12%, based on the total weight of the acrylate composition.

7. Method according to any of the preceding claims, **characterized in that** the acrylate composition further comprises at least one liquid rubber, preferably selected from the group consisting of
- butadiene/acrylonitrile copolymer-based liquid rubbers,
- (meth)acrylate-terminated products obtained by direct esterification or by transesterification, based on polyols or polyamines, and
- polyurethane-based liquid rubbers.

8. Method according to Claim 7, **characterized in that** the liquid rubbers are used in an amount of 20% to 60% by weight, preferably 35% to 55% by weight, based on the total weight of the acrylate composition.

9. Method according to any of the preceding claims, **characterized in that** the acrylate composition comprises liquid plasticizers, preferably selected from the list consisting of polypropylene glycols, preferably having a molecular weight Mₙ of 300-10 000 g/mol, and adipates, more particularly bis(2-ethylhexyl) adipate, bis(8-methylnonyl) adipate, benzyl 2-ethylhexyl adipate and diisopropyl adipate.

10. Method according to Claim 9, **characterized in that** the fraction of the liquid plasticizers is 10% - 40% by weight, preferably 20% - 30% by weight, based on the total weight of the acrylate composition.

11. Method according to any of the preceding claims, **characterized in that** the acrylate composition comprises at least one radical initiator, preferably with additionally at least one catalyst for radical formation.

12. Method according to any of the preceding claims, **characterized in that** the bulk material is non-bound bulk material, more particularly crushed rock, scree, gravel or sand, more particularly rounded gravel.

13. Method according to any of the preceding claims, **characterized in that** the substrate, particularly in the region of the inner wall of the cavity, comprises natural anhydrite.

14. Tunnel resulting from a method according to any of the preceding claims.

15. Use of an acrylate composition as described as acrylate composition in any of Claims 1-13 for introduction into interspaces and sealing thereof in a tunnel, the tunnel having been produced in tubbing construction, with tubbing components having been assembled in a mechanically produced cavity bore through a substrate in order to form a continuous lining, and the acrylate composition being introduced into the aforementioned interspace between the inner wall of the cavity and the outer walls of the tubbing components, together with bulk material.

## Revendications

1. Procédé de réalisation d'une construction de tunnel, notamment d'un tunnel de voirie, par une construction en cuvelage, selon lequel des composants de cuvelage sont assemblés dans un perçage de cavité généré par machine dans un sous-sol, afin de former un habillage fermé, et un matériau en vrac est introduit dans l'espace intermédiaire entre la paroi intérieure de la cavité et les parois extérieures des composants de cuvelage, l'espace intermédiaire étant notamment rempli avec un matériau en vrac,
**caractérisé en ce qu'**en plus de l'introduction d'un matériau en vrac dans l'espace intermédiaire, une composition d'acrylate est introduite, notamment sous pression, notamment injectée, afin de remplir l'espace intermédiaire, la composition d'acrylate comprenant moins de 10 % en poids d'eau, par rapport au poids total de la composition d'acrylate, et la composition d'acrylate consistant en une composition d'acrylate durcissable par voie radicalaire, qui comprend au moins un monomère de (méth)acrylate **R**.

2. Procédé selon la revendication 1, **caractérisé en ce que** la composition d'acrylate comprend moins de 5 % en poids, de préférence moins de 2 % en poids, de préférence moins de 1 % en poids, d'eau, par rapport au poids total de la composition d'acrylate.

3. Procédé selon l'une quelconque des revendications précédents, **caractérisé en ce que** la proportion de monomère de (méth)acrylate **R** est de 99 à 20 % en poids, notamment de 97 à 30 % en poids, de préférence de 90 à 35 % en poids, par rapport au poids total de la composition d'acrylate.

4. Procédé selon l'une quelconque des revendications précédents, **caractérisé en ce que** la composition d'acrylate comprend en outre au moins un agent de réticulation **VN** de la formule (I) : 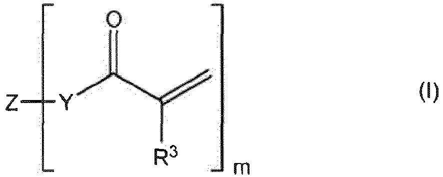 dans laquelle le radical R³ représente un atome d'hydrogène ou un groupe méthyle, l'indice m représente une valeur de 2 à 5, Z représente un polyol après l'élimination de m groupes hydroxyle et Y représente O ou NR', R' représentant un radical hydrocarboné ou un atome d'hydrogène.

5. Procédé selon la revendication 4, **caractérisé en ce que** l'agent de réticulation **VN** de la formule (I) est choisi dans le groupe constitué par le di(méth)acrylate de 1,3- et 1,4-butanediol, le di(méth)acrylate de 1,6-hexanediol, le 1,3-diméthacrylate de glycérine et le di(méth)acrylate de diéthylène glycol.

6. Procédé selon la revendication 4 ou 5, **caractérisé en ce que** la proportion d'agent de réticulation **VN** de la formule (I) est de 0,5 à 20 % en poids, notamment de 1 à 15 % en poids, de préférence de 2 à 12 % en poids, par rapport au poids total de la composition d'acrylate.

7. Procédé selon l'une quelconque des revendications précédentes, **caractérisé en ce que** la composition d'acrylate comprend en outre au moins un caoutchouc liquide, de préférence choisi dans le groupe constitué par :
- les caoutchoucs liquides à base d'un copolymère de butadiène/acrylonitrile,
- les produits à terminaison (méth)acrylate, obtenus par estérification directe ou par transestérification, à base de polyols ou de polyamines, et
- les caoutchoucs liquides à base de polyuréthane.

8. Procédé selon la revendication 7, **caractérisé en ce que** les caoutchoucs liquides sont utilisés en une quantité de 20 à 60 % en poids, de préférence de 35 à 55 % en poids, par rapport au poids total de la composition d'acrylate.

9. Procédé selon l'une quelconque des revendications précédentes, **caractérisé en ce que** la composition d'acrylate comprend des plastifiants liquides, de préférence choisis dans la liste constituée par les polypropylène glycols, de préférence ayant un poids moléculaire Mₙ de 300 à 10 000 g/mol, et les adipates, notamment l'adipate de bis(2-éthylhexyle), l'adipate de bis(8-méthylnonyle), l'adipate de benzyl(2-éthylhexyle) et l'adipate de diisopropyle.

10. Procédé selon la revendication 9, **caractérisé en ce que** la proportion des plastifiants liquides est de 10 à 40 % en poids, de préférence de 20 à 30 % en poids, par rapport au poids total de la composition d'acrylate.

11. Procédé selon l'une quelconque des revendications précédentes, **caractérisé en ce que** la composition d'acrylate comprend au moins un agent de formation de radicaux, de préférence avec en outre au moins un catalyseur pour la formation de radicaux.

12. Procédé selon l'une quelconque des revendications précédentes, **caractérisé en ce que** le matériau en vrac consiste en un matériau en vrac non lié, notamment des fragments rocheux, des éboulis, du gravier ou du sable, notamment du gravier roulé.

13. Procédé selon l'une quelconque des revendications précédentes, **caractérisé en ce que** le sous-sol comprend de l'anhydrite naturel, notamment dans la zone de la paroi intérieure de la cavité.

14. Construction de tunnel, obtenue par un procédé selon l'une quelconque des revendications précédentes.

15. Utilisation d'une composition d'acrylate telle que décrite en tant que composition d'acrylate dans l'une quelconque des revendications 1 à 13 pour l'introduction dans des espaces intermédiaires et l'étanchéification de ceux-ci dans une construction de tunnel, la construction de tunnel ayant été fabriquée par une construction en cuvelage, des composants de cuvelage ayant été assemblés dans un perçage de cavité généré par machine dans un sous-sol, afin de former un habillage fermé, et la composition d'acrylate étant introduite conjointement avec un matériau en vrac dans l'espace intermédiaire mentionné entre la paroi intérieure de la cavité et les parois extérieures des composants de cuvelage.
